# EUROPEAN PATENT SPECIFICATION

(11) **EP 3 588 859 B1**
(45) Date of publication and mention of the grant of the patent: **22.03.2023**
(21) Application number: 19182109.9
(22) Date of filing: 24.06.2019
(51) Int. Cl.: H04L 41/0816, H04L 41/0859

(54) **NETWORK DEVICE CONFIGURATION VERSIONING**
KONFIGURATIONSVERSIONIERUNG EINER NETZWERKVORRICHTUNG
VERSIONNAGE DE CONFIGURATION DE DISPOSITIF DE RÉSEAU

(30) Priority: 25.06.2018 US 201816017429
(43) Date of publication of application: 01.01.2020
(73) Proprietor: Hewlett Packard Enterprise Development LP, Spring, Texas 77389 (US)
(72) Inventor: NARAYANAN, Ganesh Ragavan, Santa Clara, CA 95054 (US); ZAYATS, Michael, Santa Clara, CA 95054 (US)
(74) Representative: Fleuchaus & Gallo Partnerschaft mbB

(56) References cited:
- EP-A2- 2 026 549
- WO-A1-2014/027881

## Description

### BACKGROUND

In the field of network computing, network connectivity between devices, compute nodes, blades, or frames of a scaleable compute resource may be implemented using a network communication device. Network communication devices, such as switches, routers, hubs, bridges, etc. represent a primary communication path for sharing data between different types of compute resources generically referred to as "nodes" of a network. The shared data may represent inputs to compute processes (e.g., data or applications), outputs of compute resources (e.g., compute results), communications to coordinate distributed processes, communications between users, and other types of data. In any "intelligent" network communication device, there may be a processor, local memory, configuration information, and "current state" information (e.g., current network state information such as port status, or route status), among other types of information. Collectively, the different types of information on a network device may be considered to represent the overall "device state" at a given point in time. For example, information on a network communication device (including its "configuration information" such as configuration parameter settings and/or current state information) is expected to change overtime, in part, because while in-service and providing active communication paths for a network, the overall configuration and available devices on that network may change. Some configuration information may change automatically (e.g., auto-configuration change) and other configuration information may change based on an action by a system administrator (e.g., manual configuration change).

In general, a switch may be thought of as a device in a computer network that connects together other devices (the above-mentioned "nodes" of the network). Multiple data cables may be plugged into a switch to enable communication between different networked devices. Switches manage the flow of data across a network by transmitting a received network packet only to the one or more devices for which the packet is intended. Each networked device connected to a switch can be identified by its network address, allowing the switch to direct the flow of traffic, possibly in an effort to maximize the security and efficiency of the network. A switch is more intelligent than a hub (e.g., Ethernet hub), which simply retransmits packets out of every port of the hub except the port on which the packet was received. In most cases, a hub is unable to distinguish different recipients, and therefore may have an overall lower network efficiency, but simpler configuration information, than a switch/router. Generally, a router is a networking device that forwards data packets between computer networks. Routers perform the traffic directing functions on the Internet. A data packet is typically forwarded from one router to another router through the networks that constitute an internetwork until the data packet reaches its destination node.

WO 2014/027881 discloses a versioning manager for a mobile computing device.

### BRIEF DESCRIPTION OF THE DRAWINGS

The present disclosure may be better understood from the following detailed description when read with the accompanying Figures. It is emphasized that, in accordance with standard practice in the industry, various features are not drawn to scale. In fact, the dimensions or locations of functional attributes may be relocated or combined based on design, security, performance, or other factors known in the art of computer systems. Further, order of processing may be altered for some functions, both internally and with respect to each other. That is, some functions may not require serial processing and therefore may be performed in an order different than shown or possibly in parallel with each other. For a detailed description of various examples, reference will now be made to the accompanying drawings, in which:
FIG. 1 is a functional block diagram of a computer infrastructure including multiple frame scaleable compute resources, a customer VLAN, and a management VLAN, according to one or more disclosed implementations;
FIG. 2 is a functional block diagram representing a first example of an external network device disposed physically between two network switches of two independent frames (or similarly configured blade resources), according to one or more disclosed implementations;
FIG. 3 is a functional block diagram representing a first example of a network device and possible functional components (logical and physical) of the network device, according to one or more disclosed implementations;
FIG. 4 is a block diagram representing a second example of a network device including a version control functional component, according to one or more disclosed implementations;
FIG. 5 is a flow chart representing a possible method to perform network device configuration changes and versioning thereof, according to one or more disclosed implementations;
FIG. 6 represents two example methods (possibly subparts of the method of FIG. 5) that may be used on different types of devices depending on the perspective and timing of use for that device, according to one or more disclosed embodiments;
FIG. 7 represents a computer network infrastructure that may be used to implement all or part of the disclosed network device configuration change versioning technique, according to one or more disclosed embodiments; and
FIG. 8 illustrates a computing device that may be used to implement the functions, modules, processing platforms, execution platforms, communication devices, and other methods and processes of this disclosure.

### DETAILED DESCRIPTION

Examples of the subject matter claimed below will now be disclosed. In the interest of clarity, not all features of an actual implementation are described in this specification. It will be appreciated that in the development of any such actual example, numerous implementation-specific decisions may be made to achieve the developer's specific goals, such as compliance with system-related and business-related constraints, which will vary from one implementation to another. Moreover, it will be appreciated that such a development effort, even if complex and time-consuming, would be a routine undertaking for those of ordinary skill in the art having the benefit of this disclosure.

Switches, hubs, routers, etc. are examples of network communication devices that may benefit from the concepts of this disclosure. Other examples of network communication devices that may also benefit include, but are not limited to: wireless access points, remote access servers, bridges, brouters, etc. Also, some network communication devices do not fit into a single classification and may be hybrids of two classes of devices (e.g., a brouter is a bridge-router hybrid). In general, this disclosure represents an improvement to the art of network computing by providing an enhanced configuration change protocol. In some disclosed implementations, additional internal (e.g., internal to the network device) and external version control techniques are disclosed to handle device configuration changes that may be used to improve performance, security, and reliability of a network (e.g., a corporate infrastructure network).

An Ethernet switch generally operates at the data link layer (layer 2) of the Open Systems Interconnection (OSI) model to create a separate collision domain for each switch port. Each device connected to a switch port can transfer data to any of the other ports at any time and the transmissions will not interfere with each other. Also, because broadcasts are still being forwarded to all connected devices by the switch, the newly formed network segment (e.g., between the switch port and the attached device) continues to be a broadcast domain. Switches may also operate at higher layers of the OSI model, including the network layer and above. A device that also operates at these higher layers may be referred to as a multilayer switch.

In some switches, built-in or modular interfaces may make it possible to connect different types of networks, including Ethernet, Fibre Channel, RapidlO, ATM, ITU-T G.hn and 802.11. This connectivity can be at different layers of the OSI model. While the layer-2 functionality may be adequate for bandwidth-shifting within one technology, interconnecting technologies such as Ethernet and token ring may be performed more easily at layer 3 or via routing. Devices that interconnect at the layer 3 are traditionally called routers, so layer 3 switches can also be regarded as relatively primitive and specialized routers.

Sometimes, for example, where there is a need for a great deal of analysis of network performance and security, switches may be connected between WAN routers as places for analytic modules. Some vendors provide firewall, network intrusion detection, and performance analysis modules that can plug into switch ports. Some of these functions may be on combined modules or integrated into a network device itself.

A router is another type of network computing device that may benefit from the concepts of this disclosure. In general, a router is a networking device that forwards data packets between computer networks. Routers perform the traffic directing functions on the Internet. A data packet is typically forwarded from one router to another router through the networks that constitute an internetwork until it reaches its destination node.

In a typical configuration, a router is connected to two or more data lines from different networks. In this configuration, when a data packet comes in on one of the lines, the router reads the network address information in the packet to determine the ultimate destination. Then, using information in its routing table or routing policy, it directs the packet to the next network on its journey.

When multiple routers are used in interconnected networks, the routers can exchange information about destination addresses using a routing protocol. Each router may build up a routing table listing the preferred routes between any two systems on the interconnected networks.

As can be seen from this brief overview of switches and routers, network communication devices range from simple forwarding type devices (e.g., hub) to more "intelligent" devices (e.g., devices that have processors and perform functions as part of their operation) that "learn" (e.g., determine shortest path or other attributes that change over time) about a network topology and attempt to make communications more efficient (e.g., switch/router). Devices that have intelligence likely contain configuration information and run-time control information (e.g., routing tables) that may change dynamically as packets are exchanged through that device. Other types of network devices may also be classified as "intelligent" devices that perform communication connectivity and may benefit from the concepts of this disclosure (e.g., wireless access point, hot-spots, etc.).

Each of these intelligent network communication devices may be considered to have a "configuration" that represents an instantaneous view into the operational capabilities, current configuration, and current processor attributes (e.g., code execution information, memory usage, and register settings) of that device. This overall device configuration may be altered through a variety of methods. Whenever a configuration change is applied to a network device it may be desirable to track the change as a version of the configuration for that network device. Change may be automatically applied as part of an automated change control process or may be manually applied by a system administrator on a per-device update. In either case, a change may require a "roll-back" (e.g., restore to previous value such as when performing an "undo" for a configuration change) if the change introduces network issues or may need to be tracked as part of an audit process for an organization.

Disclosed techniques for integrating a network device (and its configuration information) in to a version control tracking system may provide benefits to address these needs and other needs. For example, by storing information about a network device configuration in a version control system, a comparison across different devices and configurations as they change over time for a single device may be possible. Further, because configuration files may be large (relative to storage on a network device) and changes may only affect a small portion of a network device's configuration, a local "delta" storage mechanism, implemented locally to the network device, for different versions of that network device's configuration may represent an additional benefit. For example, if a network device's configuration file is a flat file of 10,000 lines and only 10 lines are changed with a configuration update, rather than storing two separate 1 0,000-line files, a delta file of approximately the 10 changed lines may be stored on the network device. Thus, a network device may be able to maintain many more local "versions" of its configuration than possible with a duplication and replacement method.

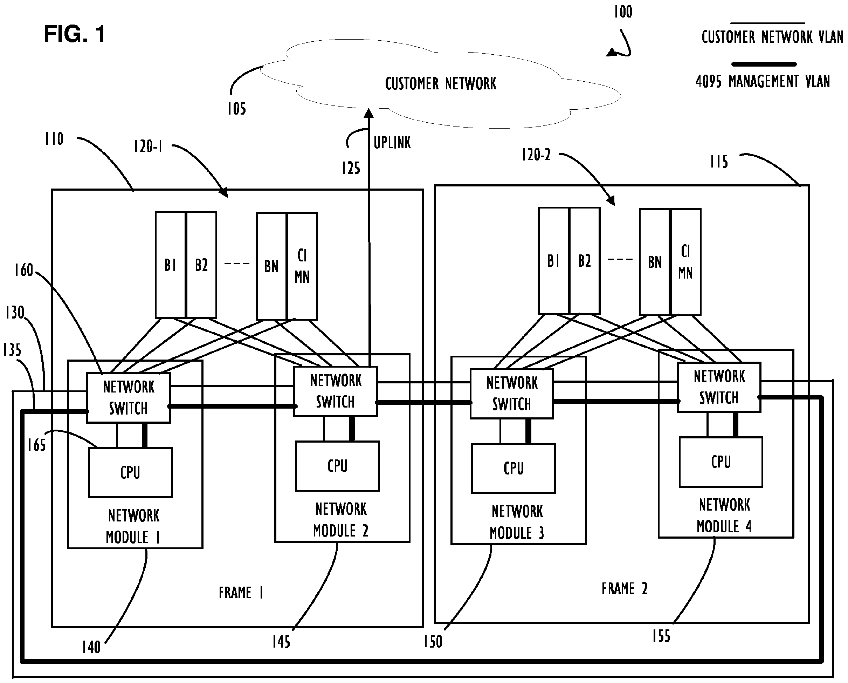

Referring to FIG. 1, an example computer infrastructure 100 is illustrated. In this example, customer network 105 is connected to a set of frames (represented by frame 1 110, and frame 2 115). Of course, more than two frames may be present but for simplicity of this disclosure only two are shown in this example. As indicated by arrow 120-1, frame 1 may be configured with a set of blades (B1, B2, ... BN) and a Composable Infrastructure (CI) module. Similarly, arrow 120-2 indicates that frame 2 may be configured in a like manner. Frame 1 further includes two network modules 140 and 145 (sometimes referred to as a Frame Link Module (FLM)). Frame 2 also include two network modules 150 and 155. These network modules provide connectivity for the compute resources represented by the blades. Each of the blades is shown with a network connection to a network switch 160 disposed within each individual network module (e.g., network module 1, 140). Each network module further includes a CPU 165 to facilitate configuration, monitoring, and maintenance of a corresponding network switch 160. Network switch 160 is an example of an "embedded" switch that is part of a larger device, in this case a network module and then in turn a Frame. Other network switches may be stand-alone device. In either case, a network switch may be considered a network device in accordance with concepts of this disclosure.

Connectivity (at a given time) from a set of frames to a customer network is typically provided by a single uplink (e.g., uplink 125) from exactly one of the plurality of network switches that exist across the multiple FLMs of a group of connected frames. That is, all communications external to the group of connected frames passes through uplink 125. As further illustrated in computer infrastructure 100, customer VLAN 130 connects each of the network switches 160 in an ethernet ring network and extends to the customer network 105 (e.g., includes VLANS 1-4094). A second ring network, 4095 management VLAN 135, is also shown in FIG. 1.4095 management VLAN is shown in a bolder line than customer VLAN 130 and also connects each of the network switches 160. Note, in a proper configuration of a group of frames according to one example high-availability implementation, each network switch will be directly connected to each neighboring switch (either in the same frame or an adjacent frame) and no intervening network devices are present.

A virtual LAN (VLAN) refers to a broadcast domain that is partitioned and isolated in a computer network at the data link layer (OSI layer 2). LAN is the abbreviation for local area network and, in this context, virtual refers to a physical object recreated and altered by additional logic. A VLAN is a custom network created from one or more existing LANs. It enables groups of devices from multiple networks (both wired and wireless) to be combined into a single logical network. The result is a virtual LAN that can be administered like a physical local area network, for example 4095 management VLAN 135 in FIG. 1. Each network switch 160 may have a different device state with respect to other network switches and that device state may change over time. Accordingly, version control of a network device's configuration across all network modules of a set of frames may be helpful to diagnose (or prevent) any communication issues experienced by the comprehensive set of related compute devices.

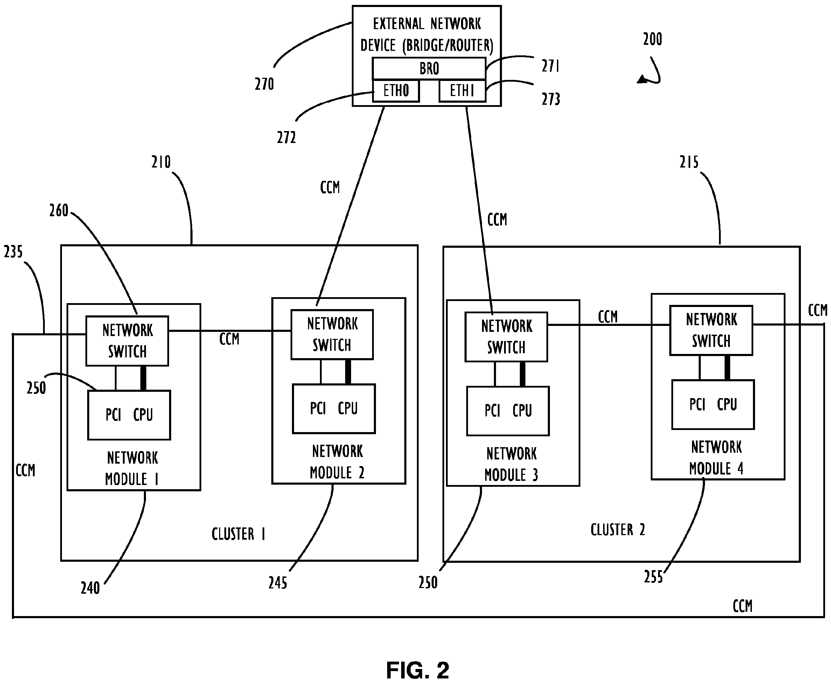

Referring now to FIG. 2, computer infrastructure 200 illustrates another connectivity possibility between independent network frames or possibly independent clusters of compute resources. Note, in the example of FIG. 2, the links between cluster compute resources Cluster 1 (210) and Cluster 2 (215) (specifically between Network Module 2 (245) and Network Module 3 (250)) do not represent a direct connection. Cluster 1 (210) and Cluster 2 (215) may be thought of as independent but related cluster resources.

For example, Cluster 2 (215) may be configured as a "hot backup" to Cluster 1 (210). Communication path 235 may provide communication directly between Cluster 1 (210) and Cluster 2 (215) to support exchange of role information and heartbeat information as appropriate. Further, in this scenario, an external network device such as bridge/router 270 has been inserted to form a communication path between distinct compute resources and possibly provide additional communication to other devices (not shown) and networks (not shown). Accordingly, the configuration of external network device 270 may, at some point, require troubleshooting (or monitoring) and the version control techniques of this disclosure may assist in that effort.

As illustrated in FIG. 2, a computer infrastructure 200 may include a plurality of different types of network devices (e.g., switch, router, bridge, etc.) that may all benefit from the disclosed embodiments of configuration versioning. Accordingly, examples of this disclosure are not limited to any particular type of network connectivity device and may be applicable to any network device that maintains a device configuration to support its function. In the example of FIG. 2, network devices with an individual configuration include each instance of network switch 260 and external network device 270. A device with a strict hardware only coupling, where no processing takes place, may not be a candidate for configuration versioning, because there may be no "configuration" to version. However, any device that maintains internal adjustable configuration information may be considered to have a "configuration" for which a versioning technique in accordance with this disclosure may be beneficial. In cases where a device does not include internal memory, the configuration may be captured directly to external storage.

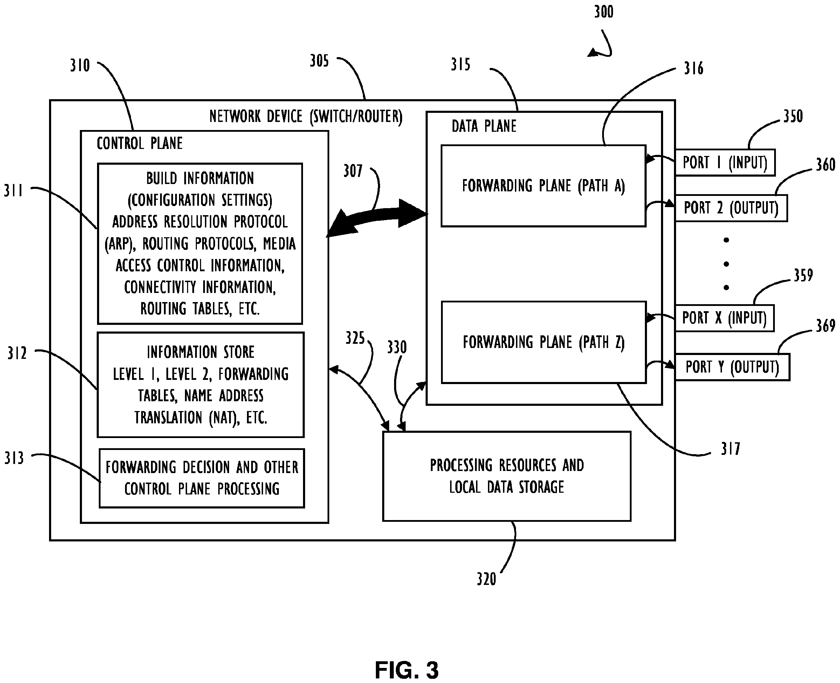

Referring now to FIG. 3, a network device such as a switch/router 305 is illustrated as in block diagram 300. In general, a router has two types of network element components organized onto separate planes illustrated as control plane 310 and data plane 315. In addition, a typical switch/router 305 may include processing resources and local data storage 320 that may include local versions of configuration information for the network device. Depending on the capabilities of a particular network device different types of processing resources and local storage may be present. In general, higher capacity network device implementations will include substantial processing resources and memory while simpler (e.g., low capacity) devices will contain less internal resources.

Control plane 310, for example in a router such as switch/router 305 may be used to maintains routing tables (or a single comprehensive routing table) that list which route should be used to forward a data packet, and through which physical interface connection (e.g., output ports 360 through 369). Control plane 310 may perform this function by using internal preconfigured directives, called static routes, or by learning routes dynamically using a routing protocol. Static and dynamic routes may be stored in one or more of the routing tables. Static routes are typically pre-configured and may be considered as one or many possible network device configuration settings for possible version control. The control-plane logic may then strip non-essential directives from the table and build a forwarding information base (FIB) to be used by data plane 315.

A router may also use a forwarding plane (e.g., part of the data plane 315) that contains different forwarding paths for information from different ports or different destination addresses (e.g., forwarding path A 316 or forwarding path Z 317). In general, The router forwards data packets between incoming (e.g., ports 350 - 359) and outgoing interface connections (e.g., ports 360 - 359). The router forwards data packets to the correct network type using information that the packet header contains matched to entries in the FIB supplied by control plane 310. In some networks implementations, a router (e.g., switch/router 305) may have interfaces for different types of physical layer connections, such as copper cables, fiber optic, or wireless transmission. A single router may also support different network layer transmission standards. Each network interface may be used to enable data packets to be forwarded from one transmission system to another. Routers may also be used to connect two or more logical groups of computer devices known as subnets, each with a different network prefix.

Also illustrated in FIG. 3, bidirectional arrow 307 indicates that control plane 310 and data plane 315 may work in a coordinated fashion to achieve the overall capabilities of a network device such as switch/router 305. Similarly, bidirectional arrow 325 indicates that processing and local data storage resources 320 may interface with control plane 310 to provide processing and storage support for capabilities assigned to control plane 310. Bidirectional arrow 330 indicates that processing and local data storage resources 320 may also interface with data plane 315 as necessary.

Control plane 310 as illustrated in FIG. 3 includes several example functional control blocks. Additional control blocks are possible depending on the capabilities of a particular implementation of switch/router 305. Block 311 indicates that control plane 310 may have associated build information regarding a software version of control code that is currently executing on switch/router 305. In addition, that software version may include configuration settings to determine how switch/router 305 and its associated control code perform different functions. Many different configuration settings for both the software and the device itself are possible and describing each is beyond the scope of this disclosure. However, the disclosed device versioning may be designed to capture as many of these configuration settings as possible (hopefully all) to accurately capture a network device state. Block 311 further indicates that different types of routing information and connectivity information may be known to switch/router 305 and control plane 310. Block 312 indicates that an information store may be accessible from control plane 310 and include forwarding tables or NAT information as appropriate. Block 313 indicates that control plane 310 may also be aware of forwarding decisions and other processing information. Although FIG. 3 illustrates these logical capabilities within control plane 310 they may actually be implemented outside of, but accessible to, control plane 310.

### Capability to OSI Level Example Mapping

Capabilities of different types of network devices (one example of which is switch/router 305) that may benefit from the disclosed version control capabilities may vary greatly. Capabilities of different network devices are generally described with respect to how those capabilities map to the OSI model. A brief overview of the different layers and their typical capability mapping is provided in the next few paragraphs to provide context for this disclosure. However, no particular OSI mapping capability is required to practice the concepts of this disclosure and this information should not be considered limiting in any way.

An Ethernet hub is an example of a simple layer 1 network device (in contrast to a switch that operates at layer 2 and router that operates at layer 3). An Ethernet hub does not manage any of the traffic coming through it. Any packet entering a port may be repeated to the output of every other port except for the port of entry. Specifically, each bit or symbol may be repeated as it flows in.

A layer 2 switch operating as a network bridge may interconnect devices in a home or office for example. The bridge may learn the MAC address of each connected device. Bridges may also buffer an incoming packet and adapt the transmission speed to that of the outgoing port. While there are specialized applications, such as storage area networks, where the input and output interfaces are the same bandwidth, this is not always the case in general LAN applications. Generally, in LANs, a switch may be used for end user access and typically concentrates lower bandwidth and uplinks into a higher bandwidth. Interconnect between switches may be regulated using spanning tree protocol (STP) that disables links so that the resulting local area network is a tree without loops. In contrast to routers, spanning tree bridges have topologies with only one active path between two points. Shortest path bridging is a layer 2 alternative to STP that allows all paths to be active with multiple equal cost paths. Information about the topologies and other information learned by a given network device represent examples of data that may be included in a device configuration version.

A layer-3 switch can perform some or all of the functions normally performed by a router. In some cases, network switches are limited to supporting a single type of physical network, typically Ethernet, whereas a router may support different kinds of physical networks on different ports. As mentioned above, many combination (e.g., hybrid) devices are possible and can perform a variety of functions such that they do not fit neatly into a single category of device. Regardless, of the overall capabilities of the device, the disclosed device configuration versioning capability may assist in troubleshooting network anomalies.

A common layer-3 capability is awareness of IP multicast through IGMP snooping. With this awareness, a layer-3 switch may increase efficiency by delivering the traffic of a multicast group only to ports where the attached device has signaled that it wants to listen to that group. Layer-3 switches typically support IP routing between VLANs configured on the switch. Some layer-3 switches support the routing protocols that routers use to exchange information about routes between networks.

While the exact meaning of the term layer-4 switch is vendor-dependent, a layer-4 switch almost always includes a capability for network address translation (NAT) and may add some type of load distribution based on Transmission Control Protocol (TCP) sessions or advanced Quality of Service (QoS) capabilities. Further, network devices may include a stateful firewall, a VPN concentrator, or be an IPSec security gateway.

Layer-7 switches may distribute the load based on uniform resource locators (URLs), or by using some installation-specific technique to recognize application-level transactions. A layer-7 switch may include a web cache and participate in a content delivery network (CDN).

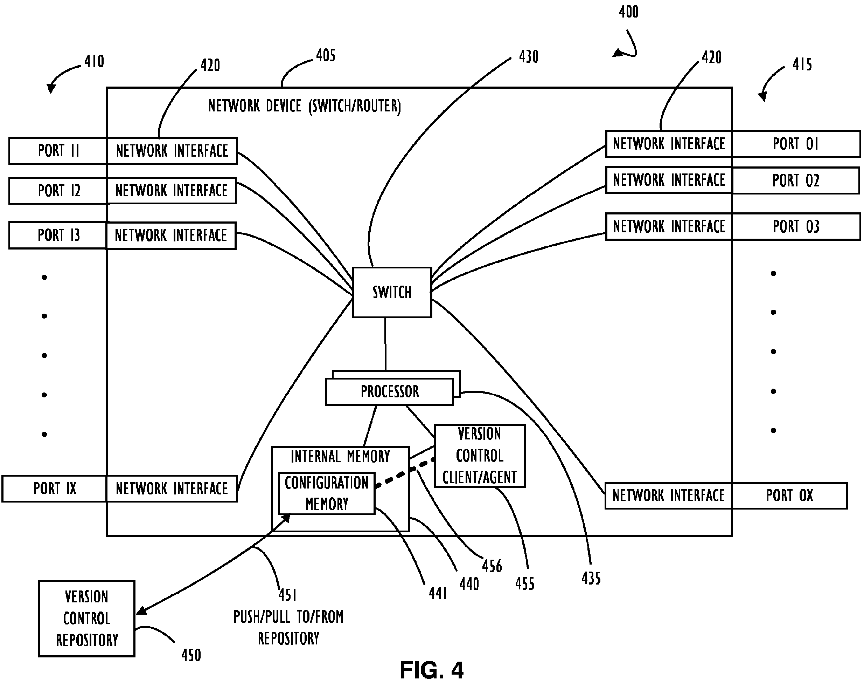

Referring now to FIG. 4, a simplified network device 405 such as a switch/router is illustrated in block diagram 400. In general, a network device 405 may include an internal switch 430 that communicatively connects a set of input/output ports 410 via a logical or physical network interface 420 to a set of input/output ports 415 that also have an associated logical or physical network interface 420. The communication paths established by switch 430 may be controlled by one or more processors 435 (and possibly corresponding hardware logic) and the processors may obtain and store information in internal memory 440. Accordingly, network device 405 represents a relatively basic switch or router architecture. In addition to standard components, network device 405 is illustrated to include version control client/agent 455 communicatively coupled to internal memory 440 and a portion thereof referred to as configuration memory 441.

Also shown in FIG. 4, is version control repository 450 that may be implemented on an external system such as a version control server. Communication path 451 represents an interface to exchange information (e.g., configuration information) from configuration memory 441 of network device 405 with version control repository 450. This exchange of information may be facilitated by version control client/agent 455. In one example implementation, version control client/agent may be responsible for handling a delta storage capability locally to network device 405. In another example implementation, version control client/agent may push or pull any configuration changes to or from version control repository. For example, when a change is applied to network device 405 (e.g., by a system administrator), that change may be automatically pushed to version control repository 450 or stored with a corresponding change delta locally on network device 405.

Periodic, responsive to change, or on demand triggers may be implemented to ensure that all changes are maintained within version control repository 450. In an alternate implementation, system administrators may make their changes first to version control repository 450 and then those changes may be "applied" to one or more network devices as appropriate.

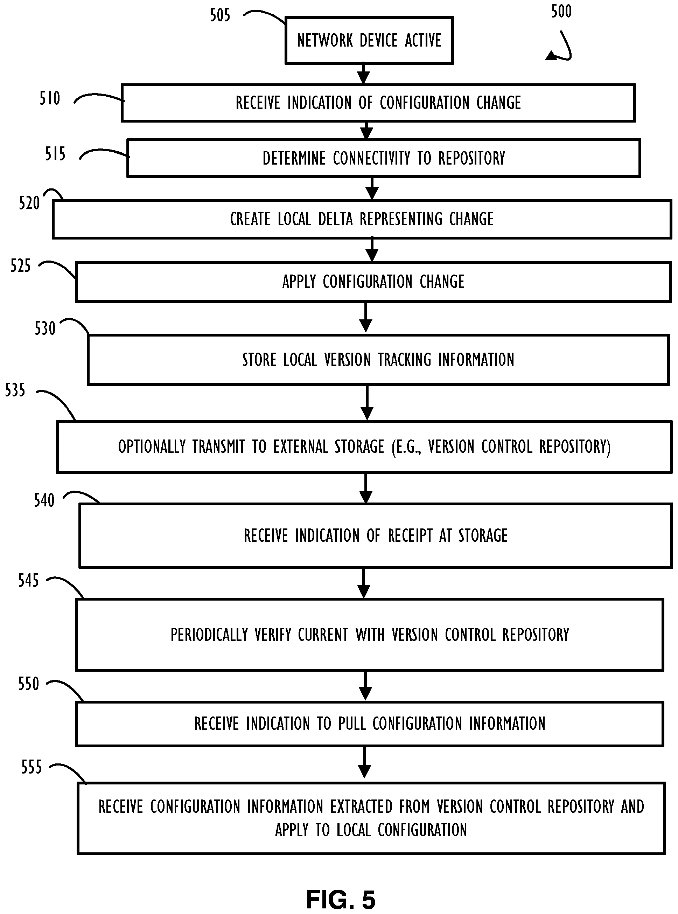

Referring now to FIG. 5, one example method 500 to version network device configurations includes a technique to "coordinate" implementation of configuration changes for a network device with a version control repository that may be external to the network device (e.g., network device 405). FIG. 5 illustrates example method 500, starting at start block 505, that may be performed for each network device in the configuration change process. At block 505 a network device may be active and performing its intended function to support network communications. Either periodically or on demand a request for a network device to change (or confirm) its configuration may be received as indicated at block 510. Block 515 indicates that, as a result of that indication, communication connectivity with a repository (e.g., version control repository) may be determined (e.g., established or verified).

Continuing with FIG. 5, block 520 indicates that a local copy of a configuration change (e.g., a local delta to configuration information) may be created to form a local versioning copy of the previous configuration. Again, there are different techniques to create the versioning copy where a local version control client/agent (e.g., version control client/agent 455 of FIG. 4) may be involved. One example of maintaining a local versioning copy (block 530) is the "delta" method used to store only changes and an indication as to where those changes belong within a "full" configuration file. Another technique would be for the version control client/agent to interact directly with a version control repository where the version control repository is responsible for maintaining different versions of information appropriately (block 535). Other techniques are also possible including implementing a "view" into a filesystem or a database such that processes running on the network device have default access to a particular version of a configuration file (while other versions are maintained for reference but not seen by default for active processes).

As shown in FIG. 5, block 540 illustrates that an indication of a receipt at external storage may be received. For example, from version control repository in communication with a version control client/agent. Block 545 illustrates that periodically the system may verify that a network device is current with configuration information as expected in the version control repository. Block 550 indicates that in addition to the above acts, or as an alternative to them, a network device may receive an indication to pull its current configuration information from an external source, such as a version control repository. Block 555 indicates that, once received, a network device may apply configuration changes locally based on what was received in block 550. A local version control client/agent may be configured to support this process.

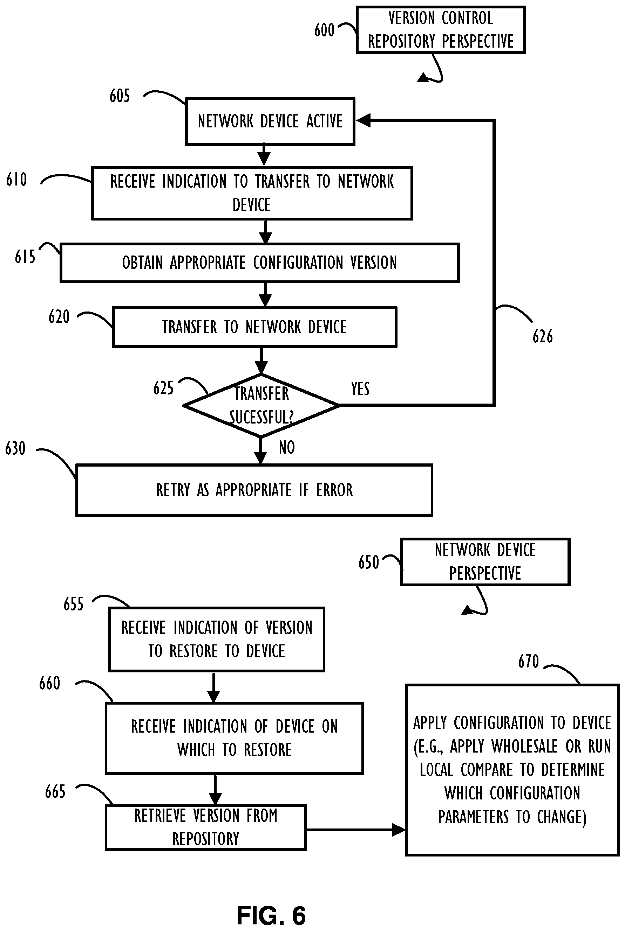

Referring now to FIG. 6, two example methods 600 and 650 are illustrated. Each of method 600 and 650 may also represent possible subparts of method 500 illustrated in FIG. 5. Methods 600 and 650 may be used on different types of devices depending on the perspective and timing of use for that device, according to one or more disclosed embodiments. In the example of FIG. 6, method 600 represents portions of a technique to capture and use network device configuration versions from the perspective of a version control repository (e.g., 450 of FIG. 4). Method 600 begins at block 605 with an active network device. Block 610 indicates that an indication to transfer configuration settings for application to a network device may be received at the version control repository. For example, as described above for method 500. Block 615 indicates that a copy of an appropriate configuration version for an identified network device may be obtained from the version control system of the version control repository. For example, by extracting based on a "tag" or other version release identifier as utilized by the version control system. Block 620 indicates that the obtained version of configuration information may be transmitted to the network device. Decision 625 indicates that an indication of success or failure with respect to the transfer/application of the configuration at the network device may be received. If the transfer/application was successful (the YES prong of decision 625) flow may return to block 605 to wait for another request. Alternatively, if the transfer/application was not successful (the NO prong of decision 625) flow may continue to block 630 where a retry process may be attempted.

In the example of FIG. 6, method 650 represents portions of a technique to capture and use network device configuration versions from the perspective of a network device (e.g., network device 405 of FIG. 4). Block 655 illustrates that an indication to restore a versioned configuration to a network device, for example, may be received. Block 660 illustrates that a user, for example, may provide an indication of configuration version to restore (or initially apply) to a particular network device (block 660). Block 665 indicates that the configuration version may be retrieved from the repository as requested. Block 670 indicates that the retrieved configuration information may be applied as a complete replacement to the current configuration information (e.g., wholesale replacement) or that a local process may compare each configuration parameter and apply those that are different. The local process may be a function of a local version control agent/client as discussed above.

Note that although a single network device is utilized to explain methods 600 and 650, a related set of network devices may also be configured to a corresponding set of stored configurations at substantially the same time period. This may allow for a system administrator to "broadcast" a configuration change to multiple network devices from a single version control repository. To be clear, in this example each network device may not receive exactly the same configuration change but may receive a configuration appropriate for that device with respect to an overall network configuration change. In one example implementation, a "tag" or other version identifier of a version control repository may be associated with many different configuration files for a corresponding many different devices. The "tag" or other version identifier (e.g., a release version tag as is utilized in software product releases) may indicate which version of which configuration file to apply for each network device as part of this broadcast "release."

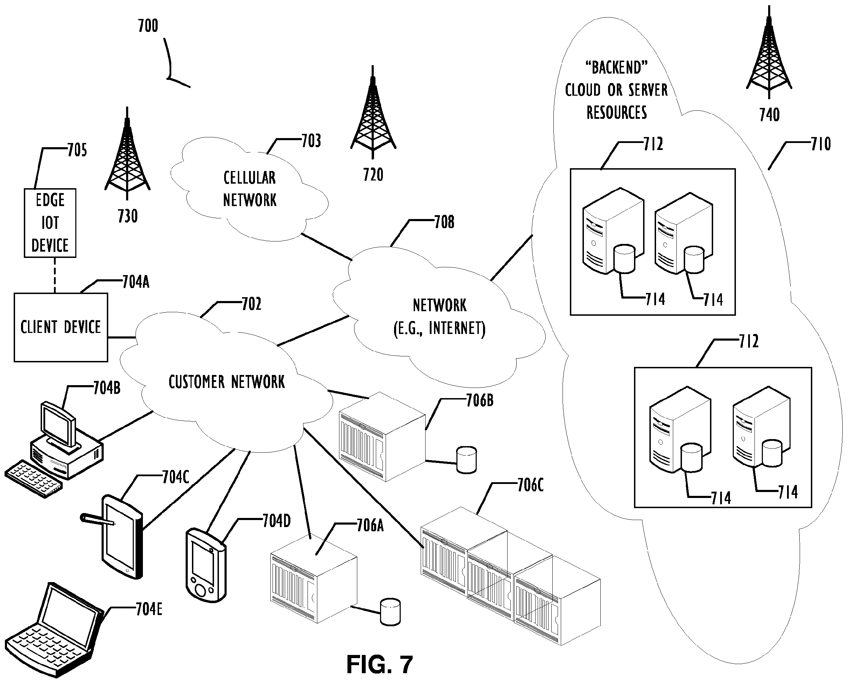

FIG. 7 represents a computer network infrastructure 700 that may be used to implement all or part of the disclosed network device configuration versioning technique or provide information flow between a system performing the technique and other computer networks, according to one or more disclosed embodiment. Network infrastructure 700 includes a set of networks where embodiments of the present disclosure may operate. Network infrastructure 700 comprises a customer network 702, network 708, cellular network 703, and a cloud service provider network 710. In one embodiment, the customer network 702 may be a local private network, such as local area network (LAN) that includes a variety of network devices that include, but are not limited to switches, servers, and routers.

Each of these networks can contain wired or wireless programmable devices and operate using any number of network protocols (*e.g.,* TCP/IP) and connection technologies (*e.g.,* WiFi^{®} networks, or Bluetooth^{®}. In another embodiment, customer network 702 represents an enterprise network that could include or be communicatively coupled to one or more local area networks (LANs), virtual networks, data centers and/or other remote networks (*e.g.,* 708, 710). In the context of the present disclosure, customer network 702 may include a network device configuration versioning method such as that described above.

As shown in FIG. 7, customer network 702 may be connected to one or more client devices 704A-E and allow the client devices 704A-E to communicate with each other and/or with cloud service provider network 710, via network 708 (*e.g.,* Internet). Client devices 704A-E may be computing systems such as desktop computer 704B, tablet computer 704C, mobile phone 704D, laptop computer (shown as wireless) 704E, and/or other types of computing systems generically shown as client device 704A.

Network infrastructure 700 may also include other types of devices generally referred to as Internet of Things (IoT) (*e.g.,* edge IOT device 705) that may be configured to send and receive information via a network to access cloud computing services or interact with a remote web browser application (*e.g.,* to receive configuration information).

FIG. 7 also illustrates that customer network 702 includes local compute resources 706A-C that may include a server, access point, router, or other device configured to provide for local computational resources and/or facilitate communication amongst networks and devices. For example, local compute resources 706A-C may be one or more physical local hardware devices, such as the frames outlined above. Local compute resources 706A-C may also facilitate communication between other external applications, data sources (*e.g.,* 707A and 707B), and services, and customer network 702.

Network infrastructure 700 also includes cellular network 703 for use with mobile communication devices. Mobile cellular networks support mobile phones and many other types of mobile devices such as laptops etc. Mobile devices in network infrastructure 700 are illustrated as mobile phone 704D, laptop computer 704E, and tablet computer 704C. A mobile device such as mobile phone 704D may interact with one or more mobile provider networks as the mobile device moves, typically interacting with a plurality of mobile network towers 720, 730, and 740 for connecting to the cellular network 703.

FIG. 7 illustrates that customer network 702 is coupled to a network 708. Network 708 may include one or more computing networks available today, such as other LANs, wide area networks (WAN), the Internet, and/or other remote networks, in order to transfer data between client devices 704A-D and cloud service provider network 710. Each of the computing networks within network 708 may contain wired and/or wireless programmable devices that operate in the electrical and/or optical domain.

In FIG. 7, cloud service provider network 710 is illustrated as a remote network (*e.g.,* a cloud network) that is able to communicate with client devices 704A-E via customer network 702 and network 708. The cloud service provider network 710 acts as a platform that provides additional computing resources to the client devices 704A-E and/or customer network 702. In one embodiment, cloud service provider network 710 includes one or more data centers 712 with one or more server instances 714. Cloud service provider network 710 may also include one or more frames representing a scalable compute resource that may benefit from the techniques of this disclosure.

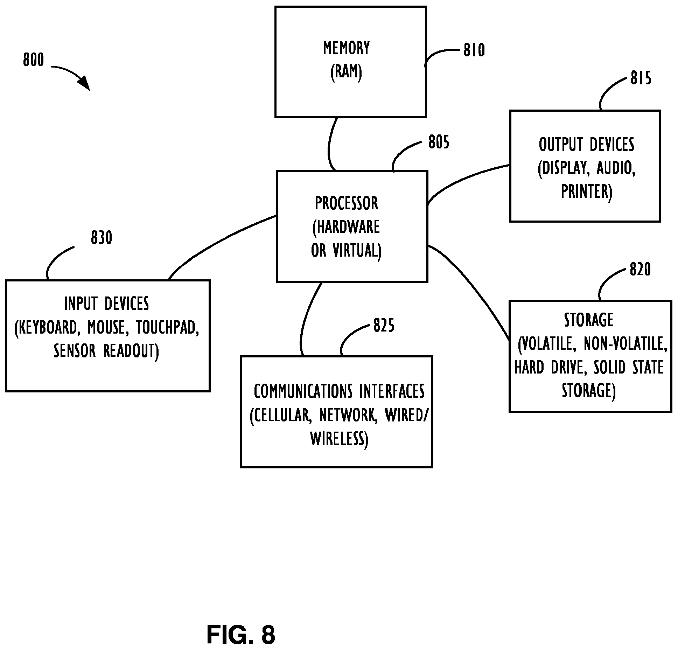

FIG. 8 illustrates a computing device 800 that may be used to implement the functions, modules, processing platforms, execution platforms, communication devices, and other methods and processes of this disclosure. For example, computing device 800 illustrated in FIG. 8 could represent a client device or a physical server device and include either hardware or virtual processor(s) depending on the level of abstraction of the computing device. In some instances (without abstraction), computing device 800 and its elements, as shown in FIG. 8, each relate to physical hardware. Alternatively, in some instances one, more, or all of the elements could be implemented using emulators or virtual machines as levels of abstraction. In any case, no matter how many levels of abstraction away from the physical hardware, computing device 800 at its lowest level may be implemented on physical hardware.

As also shown in FIG. 8, computing device 800 may include one or more input devices 830, such as a keyboard, mouse, touchpad, or sensor readout (*e.g.,* biometric scanner) and one or more output devices 815, such as displays, speakers for audio, or printers. Some devices may be configured as input/output devices also (*e.g.,* a network interface or touchscreen display).

Computing device 800 may also include communications interfaces 825, such as a network communication unit that could include a wired communication component and/or a wireless communications component, which may be communicatively coupled to processor 805. The network communication unit may utilize any of a variety of proprietary or standardized network protocols, such as Ethernet, TCP/IP, to name a few of many protocols, to effect communications between devices. Network communication units may also comprise one or more transceiver(s) that utilize the Ethernet, power line communication (PLC), WiFi, cellular, and/or other communication methods.

As illustrated in FIG. 8, computing device 800 includes a processing element such as processor 805 that contains one or more hardware processors, where each hardware processor may have a single or multiple processor cores. In one embodiment, the processor 805 may include at least one shared cache that stores data (*e.g.,* computing instructions) that are utilized by one or more other components of processor 805. For example, the shared cache may be a locally cached data stored in a memory for faster access by components of the processing elements that make up processor 805. In one or more embodiments, the shared cache may include one or more mid-level caches, such as level 2 (L2), level 3 (L3), level 4 (L4), or other levels of cache, a last level cache (LLC), or combinations thereof. Examples of processors include but are not limited to a central processing unit (CPU) a microprocessor. Although not illustrated in FIG. 8, the processing elements that make up processor 805 may also include one or more of other types of hardware processing components, such as graphics processing units (GPU), application specific integrated circuits (ASICs), field-programmable gate arrays (FPGAs), and/or digital signal processors (DSPs).

FIG. 8 illustrates that memory 810 may be operatively and communicatively coupled to processor 805. Memory 810 may be a non-transitory medium configured to store various types of data. For example, memory 810 may include one or more storage devices 820 that comprise a non-volatile storage device and/or volatile memory. Volatile memory, such as random-access memory (RAM), can be any suitable non-permanent storage device. The non-volatile storage devices 820 can include one or more disk drives, optical drives, solid-state drives (SSDs), tap drives, flash memory, read only memory (ROM), and/or any other type of memory designed to maintain data for a duration of time after a power loss or shut down operation. In certain instances, the non-volatile storage devices 820 may be used to store overflow data if allocated RAM is not large enough to hold all working data. The non-volatile storage devices 820 may also be used to store programs that are loaded into the RAM when such programs are selected for execution.

Persons of ordinary skill in the art are aware that software programs may be developed, encoded, and compiled in a variety of computing languages for a variety of software platforms and/or operating systems and subsequently loaded and executed by processor 805. In one embodiment, the compiling process of the software program may transform program code written in a programming language to another computer language such that the processor 805 is able to execute the programming code. For example, the compiling process of the software program may generate an executable program that provides encoded instructions (*e.g.,* machine code instructions) for processor 805 to accomplish specific, non-generic, particular computing functions.

After the compiling process, the encoded instructions may then be loaded as computer executable instructions or process steps to processor 805 from storage device 820, from memory 810, and/or embedded within processor 805 (*e.g.,* via a cache or on-board ROM). Processor 805 may be configured to execute the stored instructions or process steps in order to perform instructions or process steps to transform the computing device into a non-generic, particular, specially programmed machine or apparatus. Stored data, *e.g.,* data stored by a storage device 820, may be accessed by processor 805 during the execution of computer executable instructions or process steps to instruct one or more components within the computing device 800.

A user interface (*e.g.,* output devices 815 and input devices 830) can include a display, positional input device (such as a mouse, touchpad, touchscreen, or the like), keyboard, or other forms of user input and output devices. The user interface components may be communicatively coupled to processor 805. When the output device is or includes a display, the display can be implemented in various ways, including by a liquid crystal display (LCD) or a cathode-ray tube (CRT) or light emitting diode (LED) display, such as an organic light emitting diode (OLED) display. Persons of ordinary skill in the art are aware that the computing device 800 may comprise other components well known in the art, such as sensors, powers sources, and/or analog-to-digital converters, not explicitly shown in FIG. 8.

Certain terms have been used throughout this description and claims to refer to particular system components. As one skilled in the art will appreciate, different parties may refer to a component by different names. This document does not intend to distinguish between components that differ in name but not function. In this disclosure and claims, the terms "including" and "comprising" are used in an open-ended fashion, and thus should be interpreted to mean "including, but not limited to...." Also, the term "couple" or "couples" is intended to mean either an indirect or direct wired or wireless connection. Thus, if a first device couples to a second device, that connection may be through a direct connection or through an indirect connection via other devices and connections. The recitation "based on" is intended to mean "based at least in part on." Therefore, if X is based on Y, X may be a function of Y and any number of other factors.

## Claims

1. A computer-implemented method (500) comprising:
receiving an indication to apply a change to a first configuration parameter for a first network device;
obtaining a first version of a set of configuration parameters, including the first configuration parameter, prior to application of the change;
determining a delta between the first version of the set of configuration parameters and a second version of the set of configuration parameters, the second version representing the set of configuration parameters after the change;
determining a status of a connection with a remote version control repository; and
based on the status of the connection:
storing the delta locally on the first network device; or
providing the configuration changes to the remote version control repository.

2. The computer-implemented method (500) of claim 1, wherein the obtaining the first version comprises creating the first version, retrieving the first version from a first remote device, or receiving the first version from a second remote device.

3. The computer-implemented method (500) of claim 2, wherein the first remote device and the second remote device host the remote version control repository; or wherein the creating a first version is performed by a version control agent function executing locally on the first network device.

4. The computer-implemented method (500) of claim 1, wherein the determining a status is performed prior to the obtaining the first version and the obtaining the first version is performed in coordination with a function of the remote version control repository.

5. The computer-implemented method (500) of claim 1, wherein the first network device is configured with a version control client function executing locally on the first network device and the version control client function is configured to periodically determine if any changes to the first configuration parameter are not synchronized with a current set of configuration parameters associated with the first network device and stored at the remote version control repository.

6. The computer-implemented method (500) of claim 1, further comprising:
determining that the status of the connection with the remote version control repository represents that the connection exists but is not currently available; and
providing the configuration changes to the remote version control repository in response to an indication that the connection with the remote version control repository has become available.

7. The computer-implemented method (500) of claim 1, further comprising:
receiving an indication to perform a rollback for the set of configuration parameters to a previous version, the rollback to undo a change to at least the first configuration parameter;
identifying the delta corresponding to the previous version; and
applying the delta to the first configuration parameter.

8. The computer-implemented method (500) of claim 7, further comprising:
obtaining the configuration changes corresponding to the previous version from a remote version control repository or from a locally stored local version representation.

9. The computer-implemented method (500) of claim 7, further comprising:
identifying differences between the previous version and the second version; and
applying only identified differences to the first network device.

10. The computer-implemented method (500) of claim 1, wherein the indication to apply a change to the set of configuration parameters is received from the remote version control repository.

11. A non-transitory computer readable medium (810) comprising computer executable instructions stored thereon that when executed by one or more processing units (805), perform a method to maintain a network device versioned configuration, the method comprising:
receiving an indication to apply a change to a first configuration parameter for a first network device;
obtaining a first version of a set of configuration parameters, including the first configuration parameter, prior to application of the change;
determining a delta between the first version of the set of configuration parameters and a second version of the set of configuration parameters, the second version representing the set of configuration parameters after the change;
determining a status of a connection with a remote version control repository; and
based on the status of the connection:
storing the delta locally on the first network device; or
providing the configuration changes to the remote version control repository.

12. The non-transitory computer readable medium (810) of claim 11, wherein:
ft^ the obtaining the first version comprises creating the first version, retrieving the first version from a first remote device, or receiving the first version from a second remote device; and/or
the method further comprises:
receiving an indication to perform a rollback for the set of configuration parameters to a previous version, the rollback to undo a change to at least the first configuration parameter;
identifying the delta corresponding to the previous version; and
applying for the delta to the first configuration parameter.

13. A computer network device (405), comprising:
a first processing unit (435);
a first network communications interface communicatively coupling the first processing device to a computer network; and
a memory (440) communicatively coupled to the first processing unit, wherein the memory stores instructions, that when executed by the first processing unit, causes the first processing unit to perform a network device versioned configuration function, the network device versioned configuration function configured to:
receive an indication to apply a change to a first configuration parameter for the computer network device;
obtain a first version of a set of configuration parameters, including the first configuration parameter, prior to application of the change;
determine a delta between the first version of the set of configuration parameters and a second version of the set of configuration parameters, the second version representing the set of configuration parameters after the change;
determine a status of a connection with a remote version control repository; and
based on the status of the connection:
store the delta locally on the computer network device; or
provide the configuration changes to the remote version control repository.

14. The computer network device (405) of claim 13, wherein:
ft^the instructions to cause the first processing unit to obtain the first version comprise instructions to cause the first processing unit to create the first version, retrieve the first version from a first remote device, or receive the first version from a second remote device, and/or
wherein the indication to apply a change to the set of configuration parameters is received from the remote version control repository.

15. The computer network device (405) of claim 13, wherein the network device versioned configuration function is further configured to:
receive an indication to perform a rollback for the set of configuration parameters to a previous version, the rollback to undo a change to at least the first configuration parameter;
identify the delta corresponding to the previous version; and
apply for the delta to the first configuration parameter.

## Patentansprüche

1. Ein computerimplementiertes Verfahren (500), das Folgendes umfasst:
Empfangen einer Angabe, dass eine Änderungauf einen ersten Konfigurationsparameter für eine erste Netzwerkvorrichtung anzuwenden ist;
Erhalten einer ersten Version eines Satzes von Konfigurationsparametern, einschließlich des ersten Konfigurationsparameters, vor der Anwendung der Änderung;
Bestimmen eines Deltas zwischen der ersten Version des Satzes von Konfigurationsparametern und einer zweiten Version des Satzes von Konfigurationsparametern, wobei die zweite Version den Satz von Konfigurationsparametern nach der Änderung darstellt;
Bestimmen eines Status einer Verbindung mit einem Remote-Versionskontroll-Repository und
basierend auf dem Status der Verbindung:
Speichern des Deltas lokal auf der ersten Netzwerkvorrichtung oder
Zuführen der Konfigurationsänderungen zu dem Remote-Versionskontroll-Repository.

2. Computerimplementiertes Verfahren (500) nach Anspruch 1, wobei das Erhalten der ersten Version ein Erzeugen der ersten Version, Abrufen der ersten Version von einer ersten Remote-Vorrichtung oder Empfangen der ersten Version von einer zweiten Remote-Vorrichtung umfasst.

3. Computerimplementiertes Verfahren (500) nach Anspruch 2, wobei die erste Remote-Vorrichtung und die zweite Remote-Vorrichtung das Remote-Versionskontroll-Repository hosten; oder wobei das Erzeugen einer ersten Version durch eine Versionskontroll-Agentenfunktion durchgeführt wird, die lokal auf der ersten Netzwerkvorrichtung ausgeführt wird.

4. Computerimplementiertes Verfahren (500) nach Anspruch 1, wobei das Bestimmen eines Status vor dem Erhalten der ersten Version durchgeführt wird und das Erhalten der ersten Version in Koordination mit einer Funktion des Remote-Versionskontroll-Repositorys durchgeführt wird.

5. Computerimplementiertes Verfahren (500) nach Anspruch 1, wobei die erste Netzwerkvorrichtung mit einer Versionskontroll-Clientfunktion konfiguriert ist, die lokal auf der ersten Netzwerkvorrichtung ausgeführt wird, und die Versionskontroll-Clientfunktion dazu konfiguriert ist, periodisch zu bestimmen, ob irgendwelche Änderungen an dem ersten Konfigurationsparameter nicht mit einem aktuellen Satz von Konfigurationsparametern synchronisiert sind, die der ersten Netzwerkvorrichtung zugeordnet sind und in dem Remote-Versionskontroll-Repository gespeichert sind.

6. Computerimplementiertes Verfahren (500) nach Anspruch 1, das ferner umfasst:
Bestimmen, dass der Status der Verbindung mit dem Remote-Versionskontroll-Repository darstellt, dass die Verbindung existiert, aber derzeit nicht verfügbar ist; und
Zuführen der Konfigurationsänderungen zu dem Remote-Versionskontroll-Repository als Reaktion auf eine Angabe, dass die Verbindung mit dem Remote-Versionskontroll-Repository verfügbar geworden ist.

7. Computerimplementiertes Verfahren (500) nach Anspruch 1, das ferner umfasst:
Empfangen einer Angabe, dass ein Rollback für den Satz von Konfigurationsparametern auf eine vorherige Version durchzuführen ist, wobei der Rollback dazu bestimmt ist, eine Änderung an mindestens dem ersten Konfigurationsparameter rückgängig zu machen;
Identifizieren des Deltas, das der vorherigen Version entspricht; und
Anwenden des Deltas auf den ersten Konfigurationsparameter.

8. Computerimplementiertes Verfahren (500) nach Anspruch 7, das ferner umfasst:
Erhalten der Konfigurationsänderungen, die der vorherigen Version entsprechen, von einem Remote-Versionskontroll-Repository oder von einer lokal gespeicherten lokalen Versionsrepräsentation.

9. Computerimplementiertes Verfahren (500) nach Anspruch 7, das ferner umfasst:
Identifizieren von Unterschieden zwischen der vorherigen Version und der zweiten Version; und
Anwenden nur der identifizierten Unterschiede auf die erste Netzwerkvorrichtung.

10. Computerimplementiertes Verfahren (500) nach Anspruch 1, wobei die Angabe, dass eine Änderung auf den Satz von Konfigurationsparametern anzuwenden ist, aus dem Remote-Versionskontroll-Repository empfangen wird.

11. Ein nicht-transitorisches computerlesbares Medium (810), das darauf gespeicherte computerausführbare Anweisungen enthält, die, wenn sie von einer oder mehreren Verarbeitungseinheiten (805) ausgeführt werden, ein Verfahren zur Aufrechterhaltung einer versionierten Konfiguration einer Netzwerkvorrichtung durchführen, wobei das Verfahren Folgendes umfasst:
Empfangen einer Angabe, dass eine Änderung auf einen ersten Konfigurationsparameter für eine erste Netzwerkvorrichtung anzuwenden ist;
Erhalten einer ersten Version eines Satzes von Konfigurationsparametern, einschließlich des ersten Konfigurationsparameters, vor der Anwendung der Änderung;
Bestimmen eines Deltas zwischen der ersten Version des Satzes von Konfigurationsparametern und einer zweiten Version des Satzes von Konfigurationsparametern, wobei die zweite Version den Satz von Konfigurationsparametern nach der Änderung darstellt;
Bestimmen eines Status einer Verbindung mit einem Remote-Versionskontroll-Repository und
basierend auf dem Status der Verbindung:
Speichern des Deltas lokal auf der ersten Netzwerkvorrichtung oder
Zuführen der Konfigurationsänderungen zu dem Remote-Versionskontroll-Repository.

12. Nicht-transitorisches computerlesbares Medium (810) nach Anspruch 11, wobei:
das Erhalten der ersten Version ein Erzeugen der ersten Version, Abrufen der ersten Version von einer ersten Remote-Vorrichtung oder Empfangen der ersten Version von einer zweiten Remote-Vorrichtung umfasst; und/oder
das Verfahren ferner umfasst:
Empfangen einer Angabe, dass ein Rollback für den Satz von Konfigurationsparametern auf eine vorherige Version durchzuführen ist, wobei der Rollback dazu bestimmt ist, eine Änderung an mindestens dem ersten Konfigurationsparameter rückgängig zu machen;
Identifizieren des Deltas, das der vorherigen Version entspricht; und
Anwenden des Deltas auf den ersten Konfigurationsparameter.

13. Eine Computernetzwerkvorrichtung (405), die Folgendes umfasst:
eine erste Verarbeitungseinheit (435);
eine erste Netzwerkkommunikationsschnittstelle, die die erste Verarbeitungsvorrichtung kommunikativ mit einem Computernetzwerk koppelt; und
einen Speicher (440), der kommunikativ mit der ersten Verarbeitungseinheit gekoppelt ist, wobei der SpeicherAnweisungen speichert, die, wenn sie von der ersten Verarbeitungseinheit ausgeführt werden, die erste Verarbeitungseinheit veranlassen, eine Funktion für eine versionierte Konfiguration einer Netzwerkvorrichtung auszuführen, wobei die Funktion für die versionierte Konfiguration der Netzwerkvorrichtung konfiguriert ist zum:
Empfangen einer Angabe, dass eine Änderung auf einen ersten Konfigurationsparameter für die Computernetzwerkvorrichtung anzuwenden ist;
Erhalten einer ersten Version eines Satzes von Konfigurationsparametern, einschließlich des ersten Konfigurationsparameters, vor der Anwendung der Änderung;
Bestimmen eines Deltas zwischen der ersten Version des Satzes von Konfigurationsparametern und einer zweiten Version des Satzes von Konfigurationsparametern, wobei die zweite Version den Satz von Konfigurationsparametern nach der Änderung darstellt;
Bestimmen eines Status einer Verbindung mit einem Remote-Versionskontroll-Repository; und
basierend auf dem Status der Verbindung:
Speichern des Deltas lokal auf der Computernetzwerkvorrichtung oder
Zuführen der Konfigurationsänderungen zu dem Remote-Versionskontroll-Repository.

14. Computernetzwerkvorrichtung (405) nach Anspruch 13, wobei
die Anweisungen, um die erste Verarbeitungseinheit zu veranlassen, die erste Version zu erhalten, Anweisungen umfassen, um die erste Verarbeitungseinheit zu veranlassen, die erste Version zu erzeugen, die erste Version von einer ersten Remote-Vorrichtung abzurufen oder die erste Version von einer zweiten Remote-Vorrichtung zu empfangen, und/oder
wobei die Angabe, dass eine Änderung auf den Satz von Konfigurationsparametern anzuwenden ist, aus dem Remote-Versionskontroll-Repository empfangen wird.

15. Computernetzwerkvorrichtung (405) nach Anspruch 13, wobei die Funktion für die versionierte Konfiguration der Netzwerkvorrichtung weiterhin konfiguriert ist zum:
Empfangen einer Angabe, dass ein Rollback für den Satz von Konfigurationsparametern auf eine vorherige Version durchzuführen ist, wobei der Rollback dazu bestimmt ist, eine Änderung an mindestens dem ersten Konfigurationsparameter rückgängig zu machen;
Identifizieren des Deltas, das der vorherigen Version entspricht; und
Anwenden des Deltas auf den ersten Konfigurationsparameter.

## Revendications

1. Méthode implémentée par ordinateur (500) comprenant :
la réception d'une indication afin d'appliquer un changement à un premier paramètre de configuration destiné à un premier dispositif de réseau ;
l'obtention d'une première version d'un jeu de paramètres de configuration, comprenant le premier paramètre de configuration, avant l'application du changement ;
la détermination d'un delta entre la première version du jeu de paramètres de configuration et une seconde version du jeu de paramètres de configuration, la seconde version représentant le jeu de paramètres de configuration après le changement ;
la détermination d'un état d'une connexion avec un recueil de contrôle de version à distance ; et
en se basant sur le statut de la connexion :
le stockage du delta localement sur le premier dispositif de réseau ; ou
la livraison des changements de configuration au recueil de contrôle de version à distance.

2. Méthode implémentée par ordinateur (500) selon la revendication 1, dans laquelle l'obtention de la première version comprend la création de la première version, la récupération de la première version à partir d'un premier dispositif à distance, ou la réception de la première version à partir d'un second dispositif à distance.

3. Méthode implémentée par ordinateur (500) selon la revendication 2, dans laquelle le premier dispositif à distance et le second dispositif à distance hébergent le recueil de contrôle de version à distance ; ou dans laquelle la création d'une première version est réalisée par une fonction d'agent de contrôle de version s'exécutant localement sur le premier dispositif de réseau.

4. Méthode implémentée par ordinateur (500) selon la revendication 1, dans laquelle la détermination d'un statut est réalisée avant l'obtention de la première version et l'obtention de la première version est réalisée en coordination avec une fonction du recueil de contrôle de version à distance.

5. Méthode implémentée par ordinateur (500) selon la revendication 1, dans laquelle le premier dispositif de réseau est configuré avec une fonction de client de contrôle de version s'exécutant localement sur le premier dispositif de réseau et la fonction de client de contrôle de version est configurée afin de déterminer périodiquement si de quelconques changements relatifs au premier paramètre de configuration ne sont pas synchronisés avec un jeu actuel de paramètres de configuration associés au premier dispositif de réseau et stockés sur le recueil de contrôle de version à distance.

6. Méthode implémentée par ordinateur (500) selon la revendication 1, comprenant par ailleurs :
la détermination selon laquelle le statut de la connexion avec le recueil de contrôle de version à distance représente le fait que la connexion existe mais n'est pas actuellement disponible ; et
la livraison des changements de configuration au recueil de contrôle de version à distance en réponse à une indication que la connexion au recueil de contrôle de version à distance est devenue disponible.

7. Méthode implémentée par ordinateur (500) selon la revendication 1, comprenant par ailleurs :
la réception d'une indication afin de réaliser un retour en arrière pour le jeu de paramètres de configuration à une version précédente, le retour en arrière servant à annuler un changement d'au moins le premier paramètre de configuration ;
l'identification du delta correspondant à la version précédente ; et
l'application du delta au premier paramètre de configuration.

8. Méthode implémentée par ordinateur (500) selon la revendication 7, comprenant par ailleurs :
l'obtention des changements de configuration correspondant à la version précédente à partir d'un recueil de contrôle de version à distance ou d'une représentation de version locale stockée localement.

9. Méthode implémentée par ordinateur (500) selon la revendication 7, comprenant par ailleurs :
l'identification des différences entre la version précédente et la seconde version ; et
l'application uniquement des différences identifiées pour le premier dispositif de réseau.

10. Méthode implémentée par ordinateur (500) selon la revendication 1, dans laquelle l'indication d'appliquer un changement au jeu de paramètres de configuration est reçue en provenance du recueil de contrôle de version à distance.

11. Support non transitoire lisible par ordinateur (810) comprenant des instructions exécutables par ordinateur stockées dessus, qui lorsqu'il est exécuté par une ou plusieurs unités de traitement (805), réalise une méthode afin d'entretenir une configuration de version de dispositif de réseau, la méthode comprenant :
la réception d'une indication afin d'appliquer un changement à un premier paramètre de configuration destiné à un premier dispositif de réseau ;
l'obtention d'une première version d'un jeu de paramètres de configuration, comprenant le premier paramètre de configuration, avant l'application du changement ;
la détermination d'un delta entre la première version du jeu de paramètres de configuration et une seconde version du jeu de paramètres de configuration, la seconde version représentant le jeu de paramètres de configuration après le changement ;
la détermination d'un état d'une connexion avec un recueil de contrôle de version à distance ; et
en se basant sur le statut de la connexion :
le stockage du delta localement sur le premier dispositif de réseau ; ou
la livraison des changements de configuration au recueil de contrôle de version à distance.

12. Support non transitoire lisible par ordinateur (810) selon la revendication 11, dans lequel :
l'obtention de la première version comprend la création de la première version, la récupération de la première version à partir d'un premier dispositif à distance, ou la réception de la première version à partir d'un second dispositif à distance ; et/ou
la méthode comprend par ailleurs :
la réception d'une indication afin de réaliser un retour en arrière pour le jeu de paramètres de configuration à une version précédente, le retour en arrière servant à annuler un changement d'au moins le premier paramètre de configuration ;
l'identification du delta correspondant à la version précédente ; et
l'application du delta au premier paramètre de configuration.

13. Dispositif de réseau informatique (405) comprenant :
une première unité de traitement (435) ;
une première interface de communication par réseau reliant de manière communicative le premier dispositif de traitement à un réseau informatique ; et
une mémoire (440) reliée de manière communicative à la première unité de traitement, dans laquelle la mémoire stocke des instructions qui, lorsqu'elles sont exécutées par la première unité de traitement, incitent la première unité de traitement à réaliser une fonction de configuration de version de dispositif de réseau, la fonction de configuration de version de dispositif de réseau étant configurée pour :
recevoir une indication afin d'appliquer un changement à un premier paramètre de configuration destiné au dispositif de réseau informatique ;
obtenir une première version d'un jeu de paramètres de configuration, comprenant le premier paramètre de configuration, avant l'application du changement ;
déterminer un delta entre la première version du jeu de paramètres de configuration et une seconde version du jeu de paramètres de configuration, la seconde version représentant le jeu de paramètres de configuration après le changement ;
déterminer un état d'une connexion avec un recueil de contrôle de version à distance ; et
en se basant sur le statut de la connexion :
stocker le delta localement sur le dispositif de réseau informatique ; ou
livrer les changements de configuration au recueil de contrôle de version à distance.

14. Dispositif de réseau informatique (405) selon la revendication 13, dans lequel :
les instructions afin d'inciter la première unité de traitement à obtenir la première version comprennent des instructions afin d'inciter la première unité de traitement à créer la première version, à récupérer la première version à partir d'un premier dispositif à distance, ou à recevoir la première version à partir d'un second dispositif à distance ; et/ou
dans lequel l'indication d'appliquer un changement au jeu de paramètres de configuration est reçue en provenance du recueil de contrôle de version à distance.

15. Dispositif de réseau informatique (405) selon la revendication 13, dans lequel la fonction de configuration de version de dispositif de réseau est configurée pour :
recevoir une indication afin de réaliser un retour en arrière pour le jeu de paramètres de configuration à une version précédente, le retour en arrière servant à annuler un changement d'au moins le premier paramètre de configuration ;
identifier le delta correspondant à la version précédente ; et
appliquer le delta au premier paramètre de configuration.
